Europäisches Patentamt

European Patent Office

Office européen des brevets

(11) Numéro de publication: **0 314 566**
**A1**

## (12) DEMANDE DE BREVET EUROPEEN

(21) Numéro de dépôt: 88402689.9

(22) Date de dépôt: 25.10.88

(51) Int. Cl.⁴: **E 05 B 49/00**
G 08 B 26/00, B 60 R 16/02

(30) Priorité: 27.10.87 FR 8714838

(43) Date de publication de la demande:
03.05.89 Bulletin 89/18

(84) Etats contractants désignés: **DE ES GB IT**

(71) Demandeur: **Lewiner, Jacques**
**5, rue Bory d'Arnex**
**F-92210 Saint-Cloud (FR)**

**Hennion, Claude**
**14, rue de la Glacière**
**F-75013 Paris (FR)**

(72) Inventeur: **Lewiner, Jacques**
**5, rue Bory d'Arnex**
**F-92210 Saint-Cloud (FR)**

**Hennion, Claude**
**14, rue de la Glacière**
**F-75013 Paris (FR)**

(74) Mandataire: **Behaghel, Pierre et al**
**CABINET PLASSERAUD 84 rue d'Amsterdam**
**F-75009 Paris (FR)**

㊼ Perfectionnements aux dispositifs du genre des contacts électriques utilisés pour la commande des serrures.

㊿ L'invention concerne un bouton-poussoir (3) destiné à commander à distance une serrure (1). Ce bouton-poussoir est associé à un circuit électronique (7) comprenant une mémoire contenant un code numérique représentatif de l'adresse du bouton-poussoir, des moyens pour comparer à ce code des signaux codés d'interrogation (A) appliqués cycliquement sur le bouton-poussoir et des moyens pour émettre un signal codé de réponse positive (B) lorsque ladite comparaison révèle une identité entre les codes comparés et que le bouton-poussoir est fermé et seulement dans un tel cas.

FIG.2.

EP 0 314 566 A1

## Description

**Perfectionnements aux dispositifs du genre des contacts électriques utilisés pour la commande des serrures.**

L'invention concerne les dispositifs du genre des contacts électriques exploités directement ou indirectement pour commander l'ouverture d'une serrure électrique ou le déclenchement d'une signalisation en rapport avec une telle commande, dispositifs associés à une source de courant électrique et à une ligne électrique unique à deux fils propre à transporter le courant de la source à la serrure ou analogue.

Les contacts en question sont par exemple des boutons-poussoirs destinés à commander l'excitation d'électro-aimants ou moteurs électriques associés aux organes de verrouillage de serrures, organes tels que des pênes propres à coopérer avec des gâches ou que des volets propres à libérer de telles gâches.

Lesdits contacts peuvent également être montés sur les serrures elles-memes ou sur les portes équipées par ces serrures de façon à élaborer des informations relatives notamment à l'état ouvert ou fermé desdites serrures, à la position ouverte ou fermée desdites portes ou encore à l'utilisation d'une clé introduite dans le trou d'une serrure.

L'invention a pour but, surtout, de renforcer la sûreté des commandes assurées par les actionnements des contacts électriques du genre en question en faisant en sorte que ces actionnements ne se traduisent pas directement et systématiquement par l'application d'une tension électrique sur le récepteur électrique correspondant, une telle application n'étant rendue effective qu'après un contrôle préalable faisant intervenir un codage.

Pour assurer un tel contrôle, les contacts du genre en question selon l'invention sont essentiellement caractérisés en ce qu'ils sont associés à un circuit électronique comprenant :

- une mémoire contenant un code numérique représentatif de l'adresse du contact considéré,
- des moyens pour comparer à ce code des signaux codés d'interrogation appliqués depuis la ligne sur ledit contact, notamment d'une façon systématique et cyclique,
- et des moyens pour émettre sur ladite ligne un signal codé de réponse positive lorsque ladite comparaison révèle une identité entre les codes comparés et que le contact est placé en sa position de travail et seulement dans un tel cas.

En outre les contacts considérés sont associés à des moyens complémentaires susceptibles, les premiers d'élaborer les signaux codés d'interrogation, notamment de manière cyclique et systématique, et les seconds, d'exploiter les signaux codés de réponse positive aux fins d'exécution des commandes ou signalisations assignées aux mises en position de travail des contacts.

Les premiers desdits moyens sont constitués par un circuit de traitement de données numériques.

Les seconds desdits moyens sont agencés de façon à élaborer des signaux codés de commande appropriés en réponse aux signaux codés de réponse positive et à les appliquer sur la ligne.

En outre il est prévu des circuits de décodage et de déverrouillage associés aux organes récepteurs à commander et comprenant d'une part un interrupteur d'entrée et d'autre part un circuit électronique, de préférence du type intégré, propre à recevoir les signaux de commande ci-dessus, à les comparer à un code préalablement enregistré et à actionner l'interrupteur s'il y a identité entre les deux codes ainsi comparés.

Dans des modes de réalisation préférés, le circuit électronique associé au contact considéré et propre à traiter les signaux codés d'interrogation qui sont appliqués sur ce contact est d'un type intégré et il est incorporé à l'un des composants du contact.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

La figure 1, de ce dessin, montre schématiquement un ensemble de commande électrique à distance d'une serrure, comprenant un bouton-poussoir de commande perfectionné selon l'invention, en sa position sortie de repos.

La figure 2 montre schématiquement le meme ensemble avec le bouton-poussoir en sa position de travail enfoncée.

La figure 3 montre schématiquement, plus en détail, le circuit électronique associé audit bouton-poussoir.

D'une façon générale, on désire appliquer à un organe électrique récepteur 1 une tension électrique élaborée à partir d'une source 2, par l'intermédiaire d'un contact électrique de commande 3 et de deux fils 4.

Dans le mode de réalisation illustré ici à titre d'exemple,
- l'organe récepteur 1 est une serrure susceptible d'être commandée électriquement à distance, le déverrouillage de cette serrure étant obtenu en dégageant son pêne 5 d'une gâche 6 alors que son verrouillage est obtenu en faisant rentrer le pêne dans la gâche, les déplacements du pêne étant notamment assurés par l'excitation d'un électro-aimant dans le sens de la sortie, par l'excitation d'un second électro-aimant ou par la détente d'un ressort de rappel dans le sens de la rentrée, ou encore par l'excitation d'un moteur électrique à deux sens de rotation pour respectivement la rentrée et la sortie,
- et le contact 3 est un bouton-poussoir électrique sollicité élastiquement vers sa position sortie de repos correspondant à l'ouverture.

Un circuit électronique 7 est associé au bouton-poussoir 3 et lui-même connecté à une unité de contrôle 8 interposée entre ledit bouton-poussoir et la source 2.

Le circuit 7 et l'unité 8 sont agencés de façon telle que l'enfoncement du bouton-poussoir 3 ne se traduit pas directement par une simple application, sur la serrure 1, d'une impulsion de tension électrique non codée émise par la source 2.

En effet, si c'était le cas, cela signifierait que la serrure peut être ouverte par simple application d'une telle impulsion de tension électrique non codée sur des fils 9 branchés frauduleusement en un point quelconque des fils de liaison 4.

Une telle manoeuvre frauduleuse doit être rendue impossible, par exemple dans le cas où les actionnements du bouton-poussoir 3 sont réservés à des personnes habilitées --qui doivent par exemple à cet effet composer préalablement un code d'accès-- et ce même si un tronçon, des fils 4, compris entre le bouton-poussoir et la serrure, est facilement accessible depuis l'extérieur de la porte équipée de cette serrure.

Une telle sûreté est assurée selon l'invention en agençant l'ensemble de façon telle que l'enfoncement du bouton-poussoir 3 se traduise par l'émission, sur les fils 4, de signaux codés particuliers, la serrure 1 étant elle-même associée à un circuit 10 propre à décoder ces signaux et à n'assurer les commandes d'ouverture désirées que si les codes portés par ces derniers correspondent à un code préalablement enregistré dans ledit circuit.

Plus précisément, l'unité 8 est agencée de façon à émettre en permanence cycliquement un message binaire correspondant à l'adresse --supposée être ici 101-- du bouton-poussoir 3, ce message faisant notamment partie d'une succession de messages d'interrogation correspondant aux adresses des différents contacts de l'installation comprenant la porte équipée de la serrure 1 à contrôler, dans le cas le plus général où une telle installation comprend plusieurs tels contacts.

Ladite unité 8 est également agencée de façon à recevoir les signaux de réponse élaborés comme suite à la réception des messages d'interrogation ci-dessus par le circuit 7 associé au bouton-poussoir 3 et par les circuits analogues associés aux autres contacts de l'installation s'il y en a, et à former et émettre dès réception de ces signaux de réponse, lorsqu'ils signalent l'état fermé des contacts interrogés, des signaux de commande ou de signalisation correspondant respectivement aux missions affectées aux fermetures desdits contacts.

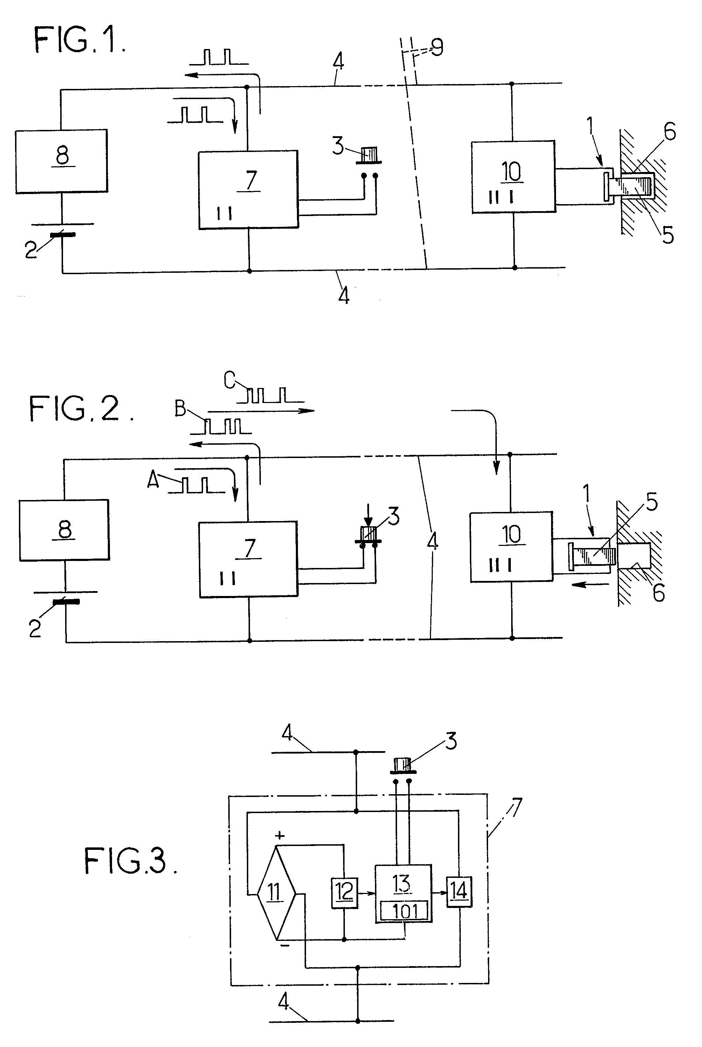

Le circuit 7 associé au bouton-poussoir 3, quant à lui, est agencé de façon à remplir les fonctions suivantes :
- tant que le bouton-poussoir 3 demeure ouvert (figure 1), ce circuit 7 demeure inactif et, après identification du code adresse porté par les signaux d'interrogation, il ne fait que renvoyer sur les lignes 4 des signaux de réponse négative, c'est-à-dire identiques aux signaux d'interrogation reçus, ou tout au moins modifiés de façon à signifier l'état ouvert dudit bouton-poussoir,
- au contraire, dès que le bouton-poussoir 3 est fermé (figure 2), le circuit 7 élabore en réponse aux signaux d'interrogation A, s'ils sont correctement adressés, des signaux de réponse positive B qui peuvent être par exemple caractérisés par l'addition d'un bit 1 aux signaux A correspondant ; dès réception de ces signaux de réponse positive B, l'unité centrale 8 émet sur les fils 4 des signaux C de commande de la serrure 1, signaux contenant en particulier l'adresse de cette serrure, laquelle est supposée être 1101 dans le cas illustré : le circuit 10 associé à cette serrure 1 est agencé de façon à exploiter les signaux C correctement codés aux fins d'ouverture de la serrure 1, notamment en fermant à cet effet un interrupteur d'entrée monté en série entre la source 2 et l'élément électriquement excitable propre à actionner le pêne 5.

Pour éviter la multiplication des fils 4 de liaison et même limiter leur nombre à deux, comme illustré, tout en assurant une transmission correcte de la totalité des tensions et signaux électriques entre la source 2, le bouton-poussoir 3 et les circuits 7, 8 et 10, on a recours aux deux mesures suivantes.

On affecte aux différents signaux binaires codés des tranches de temps distinctes, lesquelles peuvent être renouvelées cycliquement, chaque tranche durant par exemple 1/100 de seconde et étant par exemple à nouveau disponible périodiquement au rythme de la seconde.

Quant aux impulsions de tension de commande prévues pour exciter les récepteurs 1, et en particulier les électro-aimants ou moteurs d'actionnement des serrures, elles peuvent être constituées :
- par des tensions porteuses continues et permanentes auxquelles sont superposés simultanément les signaux codés binaires, ces derniers pouvant se présenter alors sous la forme d'impulsions de tension continue d'amplitude plus faible (par exemple de 1 et de 2 volts si l'amplitude de la porteuse est de 12 volts) ou sous la forme de signaux alternatifs à deux fréquences différentes, généralement comprises toutes les deux entre 1 et 50 kHz,
- ou encore par des impulsions de tension continue occupant chacune seulement une tranche de temps réduite et renouvelée périodiquement, par exemple de l'ordre de 0,2 seconde, renouvelée au rythme de la seconde, l'amplitude de ces impulsions étant par exemple de l'ordre de 48 volts alors que les impulsions binaires de codage occupant le reste du temps ont une amplitude de quelques volts seulement.

La figure 3 montre un mode de réalisation particulier du circuit 7, lequel est monté en parallèle entre les deux fils 4.

Ce circuit 7 comprend successivement :
- un pont redresseur 11 dont l'entrée est branchée entre les deux fils 4 et propre à élaborer sur sa sortie une tension redressée continue de polarité prédéterminée, et ce quelle que soit la forme alternative ou continue de la tension d'entrée et quel que soit le sens du branchement entre les deux fils 4 si cette tension d'entrée est continue,
- un circuit 12 de régulation de l'alimentation,
- un circuit 13 de décodage et d'identification de l'état ouvert ou fermé du bouton-poussoir 3, circuit propre à élaborer les signaux de réponse ci-dessus,
- et un circuit 14 de mise en forme de ces signaux.

En suite de quoi, et quel que soit le mode de réalisation adopté, on dispose finalement d'un dispositif du genre des contacts électriques de commande permettant d'assurer en toute sécurité l'ouverture d'une serrure à distance ou une signalisation apparentée à l'ouverture d'une telle serrure, dispositif dont la constitution, le fonctionnement et les avantages résultent suffisamment de ce qui précède : avec un tel dispositif, l'actionnement du contact se traduit par l'émission sélective, vers l'organe à commander, d'impulsions codées d'une manière prédéterminée susceptibles d'être décodées par ce seul organe.

Tout se passe en définitive comme si ledit contact était doué d'une certaine intelligence, sachant de lui-même reconnaître, parmi les organes récepteurs auxquels il est relié lors de ses enfoncements, celui qui est habilité à recevoir une alimentation électrique effective à travers lui.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment :
- celles où le contact de commande serait constitué par un organe autre qu'un bouton-poussoir, par exemple par un contact proprement dit essentiellement constitué par un élément conducteur mobile propre à coopérer avec un élément conducteur fixe et monté dans une gâche de serrure ou sur une porte équipée d'une telle serrure ou sur un chambranle d'une telle porte, etc ...,
- celles où le récepteur électronique à commander serait autre qu'une serrure, étant par exemple un organe de signalisation tel qu'un voyant lumineux ou qu'une alarme,
- celles où les positions "de travail" de l'un et/ou l'autre des contacts et interrupteurs ci-dessus décrits correspondraient à leur état ouvert et non pas fermé,
- et celles où l'unité 8 serait regroupée avec le circuit électronique 7, solution qui peut se révéler particulièrement avantageuse lorsque le nombre des contacts de commande et le nombre des récepteurs électriques sont tous les deux très faibles, étant par exemple réduits chacun à 1 : ce dernier cas peut se révéler particulièrement avantageux lorsque les circuits correspondants se présentent sous une forme intégrée et peuvent donc être incorporés au contact lui-même ; dans l'hypothèse qui vient d'être envisagée, l'ensemble des circuits électroniques 7 et 8 peut être simplifié, les signaux de réponse positive B pouvant être alors confondus avec les signaux de commande C, ce qui revient à considérer le circuit 7 ci-dessus comme susceptible d'émettre lui-même de tels signaux de commande C sans passer par l'intermédiaire des signaux de réponse positive B.

**Revendications**

1. Dispositif du genre des contacts électriques (3) pour commander l'ouverture d'une serrure (1) ou déclencher une signalisation en rapport avec une telle commande, associé à une source de courant (2) et à une ligne électrique unique à deux fils (4) propre à transporter le courant de la source à la serrure ou analogue, caractérisé en ce qu'il est associé d'une part à un circuit électronique (7) comprenant une mémoire contenant un code numérique représentatif de l'adresse du contact (3) considéré, des moyens pour comparer à ce code des signaux codés d'interrogation (A) appliqués depuis la ligne (4) sur ledit contact et des moyens pour émettre sur ladite ligne (4) un signal codé de réponse positive (B) lorsque ladite comparaison révèle une identité entre les codes comparés et que le contact est placé en sa position de travail et seulement dans un tel cas et d'autre part à des moyens (8) pour élaborer des signaux codés de commande (C) en réponse aux signaux codés de réponse positive (B) et pour les appliquer sur la ligne (4).

2. Contact selon la revendication 1, caractérisé en ce qu'il est associé à des moyens (8) propres à élaborer les signaux codés d'interrogation (A) d'une manière cyclique et systématique.

3. Contact selon l'une quelconque des revendications 1 et 2, caractérisé en ce que le circuit électronique (7) qui lui est associé est d'un type intégré et est incorporé à l'un des composants de ce contact.

4. Contact selon la revendication 3, caractérisé en ce que les moyens d'élaboration (8) sont regroupés avec le circuit électronique (7) dans un ensemble compact incorporé au contact pour au moins sa majeure partie.

# FIG.1.

# FIG.2.

# FIG.3.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-4 136 333 (SHIZUO SUMIDA et al.) * Figures 1-4; colonne 2, ligne 15 - colonne 6, ligne 62 * | 1-3 | E 05 B  49/00 G 08 B  26/00 B 60 R  16/02 |
| A |  | 4 |  |
|  | --- |  |  |
| X | ELECTRO/81 CONFERENCE RECORD, vol. 6, 7-9 avril 1981, pages 1-10, New York, US; D. FOLKES: "Serial network simplifies the design of multiple microcomputer systems" * Résumé * | 1-3 |  |
|  | --- |  |  |
| A | US-A-4 370 561 (BRIGGS) * Figures 1-4; colonne 1, ligne 53 - colonne 7, ligne 3 * | 1,2,4 |  |
|  | --- |  |  |
| A | US-A-3 757 050 (MASANORI) * Figures 1-3; colonne 2, ligne 23 - colonne 4, ligne 37 * | 1,2 |  |
|  | ----- |  |  |

**DOMAINES TECHNIQUES RECHERCHES (Int. Cl.4)**

E 05 B
G 08 B
B 60 R

Le présent rapport a été établi pour toutes les revendications

| Lieu de la recherche | Date d'achèvement de la recherche | Examinateur |
|---|---|---|
| LA HAYE | 08-02-1989 | HERBELET J.C. |